# EUROPEAN PATENT SPECIFICATION

(11) **EP 3 550 579 B1**
(45) Date of publication and mention of the grant of the patent: **19.05.2021**
(21) Application number: 17879358.4
(22) Date of filing: 28.07.2017
(51) Int. Cl.: H01F 38/14, H01F 27/28, H01F 27/30, H02J 50/10, H02J 50/40

(54) **COIL UNIT**
SPULENEINHEIT
UNITÉ DE BOBINE

(30) Priority: 05.12.2016 JP 2016235636
(43) Date of publication of application: 09.10.2019
(73) Proprietor: Panasonic Intellectual Property Management Co., Ltd., Osaka-shi, Osaka 540-6207 (JP)
(72) Inventor: SUZUKI, Hidekazu, Osaka-shi, Osaka 540-6207 (JP); KIYOHARA, Tsutomu, Osaka-shi, Osaka 540-6207 (JP)
(74) Representative: SSM Sandmair
(86) International application number: PCT/JP2017/027428
(87) International publication number: WO 2018/105167

(56) References cited:
- JP-A- 2007 324 532
- JP-A- 2008 120 239
- JP-A- 2015 012 066
- JP-A- 2015 128 141
- JP-A- 2017 017 874
- US-A1- 2014 327 391
- US-A1- 2015 091 518

## Description

### TECHNICAL FIELD

The present disclosure relates to a coil unit.

### BACKGROUND ART

Such a coil unit has heretofore been known that has a retaining member which retains a coil in a groove formed on the retaining member (see, for example, PTL 1).

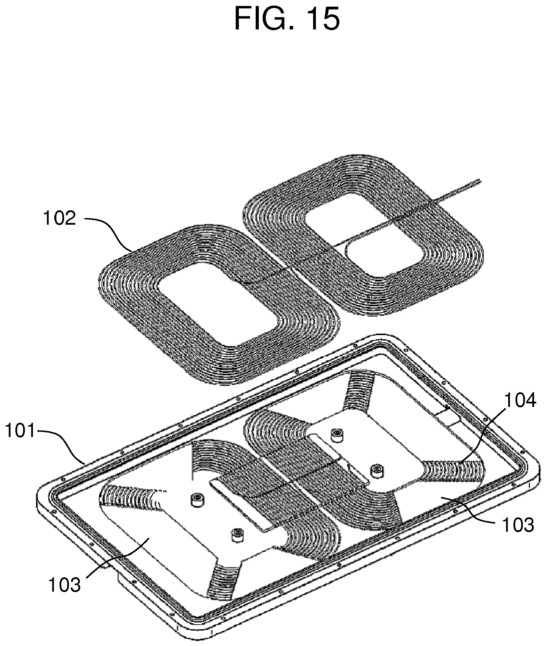

FIG. 15 is an exploded perspective view of the conventional coil unit. As shown in FIG. 15, the conventional coil unit has vehicle pad cover 101 having an approximately rectangular depression, and DD coil structure 102 retained in vehicle pad cover 101.

Rounded rectangular depressions 103 are formed in the base of the depression of vehicle pad cover 101. Spiral groove 104 is formed in each depression 103 so as to retain DD coil structure 102.

In the conventional coil unit, DD coil structure 102 is inserted in spiral groove 104 to be retained in vehicle pad cover 101.

### Citation List

### Patent Literature

PTL 1: US 2014/327391 A1

### SUMMARY OF THE INVENTION

The conventional coil unit still has room for improvement from the view point of improving reliability.

More specifically, the above prior art document discloses the coil unit having the configuration in which a coil conductor is inserted in the spiral groove formed in the retaining member to be retained in the retaining member. However, the prior art document neither disclose, nor suggest dimensions of the spiral groove.

Therefore, in a case where the curvature of the spiral groove relative to the diameter of the coil conductor is inappropriate, or more specifically, for example, the curvature of the spiral groove is excessively smaller than the diameter of the coil conductor, the coil conductor would float from the spiral groove, so that the coil unit cannot be maintained in a desired state. As a result, performance and reliability of the coil unit will reduce.

An object of the present disclosure is to solve the above-described problem of the conventional art to provide a highly reliable coil unit.

A coil unit according to the present invention as defined in claim 1 comprises: a coil conductor formed of a plurality of element wires; and a coil base having a groove configured to retain the coil conductor. The coil conductor has a diameter in a range from 3 mm to 6 mm, inclusive. The groove has a straight portion, and an arc portion having a radius of curvature of at least 20 mm.

According to the invention as defined in claim 1, it is possible to prevent separation of the coil conductor from the coil base and break of the coil conductor. As a result, reliability of the coil unit can be improved.

### BRIEF DESCRIPTION OF DRAWINGS

FIG. 1 is a perspective view of a coil unit at a power receiver end and a coil unit at a power transmitter end in accordance with an exemplary embodiment.
FIG. 2 is an exploded perspective view of the coil unit at the power receiver end and the coil unit at the power transmitter end in accordance with the exemplary embodiment.
FIG. 3 is a sectional view of a coil conductor at the power receiver end in accordance with the exemplary embodiment.
FIG. 4 is a plan view of a coil base at the power receiver end in accordance with the exemplary embodiment.
FIG. 5 is a perspective view of the coil base at the power receiver end in accordance with the exemplary embodiment.
FIG. 6 is a sectional view of a coil conductor at the power transmitter end in accordance with the exemplary embodiment.
FIG. 7 is a perspective view of a coil base at the power transmitter end in accordance with the exemplary embodiment.
FIG. 8 is a sectional view of the coil base at the power receiver end in accordance with the exemplary embodiment.
FIG. 9 is a sectional view of the coil base at the power transmitter end in accordance with the exemplary embodiment.
FIG. 10 is a sectional view of a coil base at the power receiver end in accordance with a modification example of the exemplary embodiment.
FIG. 11 is a sectional view of a coil base at the power transmitter end in accordance with the modification example of the exemplary embodiment.
FIG. 12A is a sectional view of a second stranded wire at the power receiver end in accordance with the exemplary embodiment.
FIG. 12B is a sectional view of a second stranded wire at the power transmitter end in accordance with the exemplary embodiment.
FIG. 13A is a sectional view of a third stranded wire at the power receiver end in accordance with the exemplary embodiment.
FIG. 13B is a sectional view of a third stranded wire at the power transmitter end in accordance with the exemplary embodiment.
FIG. 14A is a sectional view of a coil conductor at the power receiver end in accordance with the exemplary embodiment.
FIG. 14B is a sectional view of a coil conductor at the power transmitter end in accordance with the exemplary embodiment.
FIG. 15 is an exploded perspective view of the conventional coil unit.

### DESCRIPTION OF EMBODIMENTS

A coil unit according to the present invention as defined in claim 1 comprises: a coil conductor formed of a plurality of element wires; and a coil base having a groove configured to retain the coil conductor. The coil conductor has a diameter in a range from 3 mm to 6 mm, inclusive. The groove has a straight portion, and an arc portion having a radius of curvature of at least 20 mm.

In a particular embodiment the coil unit is configured such that a depth of the groove is larger than the diameter of the coil conductor, and a difference between the depth of the groove and the diameter of the coil conductor is in a range from 1.5 mm to 2.0 mm, inclusive.

In a further embodiment the coil unit is configured such that the coil conductor includes a first stranded wire formed by twisting together a plurality of element wires, a second stranded wire formed by twisting together a plurality of the first stranded wires, and a third stranded wire formed by twisting together a plurality of the second stranded wires.

In a further embodiment the coil unit is configured such that a twist pitch of the first stranded wire is smaller than a twist pitch of the second stranded wire, and the twist pitch of the second stranded wire is smaller than a twist pitch of the third stranded wire.

In a further embodiment the coil unit is configured such that the coil conductor includes an insulating member that covers an outer periphery of the plurality of element wires.

A preferred exemplary embodiment of the present disclosure will hereinafter be described in detail with reference to the drawings. In the following description, like parts or corresponding parts will be indicated by like reference marks, and duplicate description on them will be omitted.

The exemplary embodiment described hereinafter is an example in which a coil unit in accordance with the present disclosure is applied to a contactless power transmission system for supplying power to an electric vehicle in a contactless manner.

### Overview of the Coil Unit

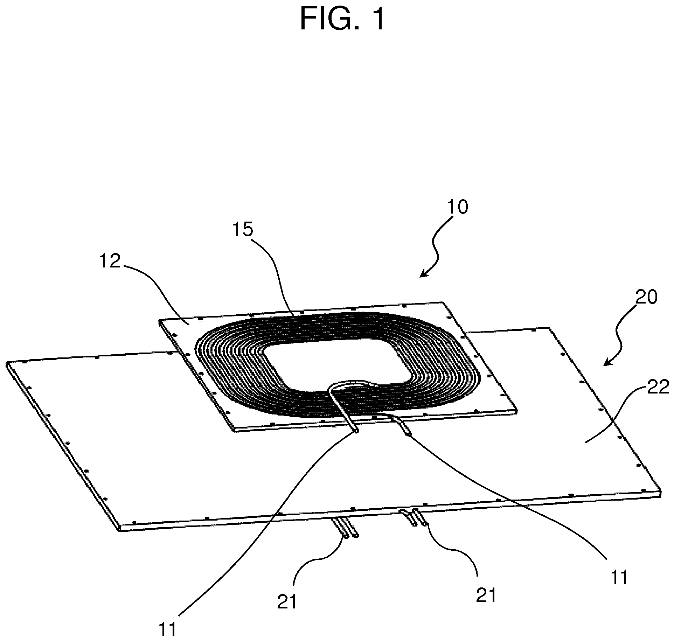

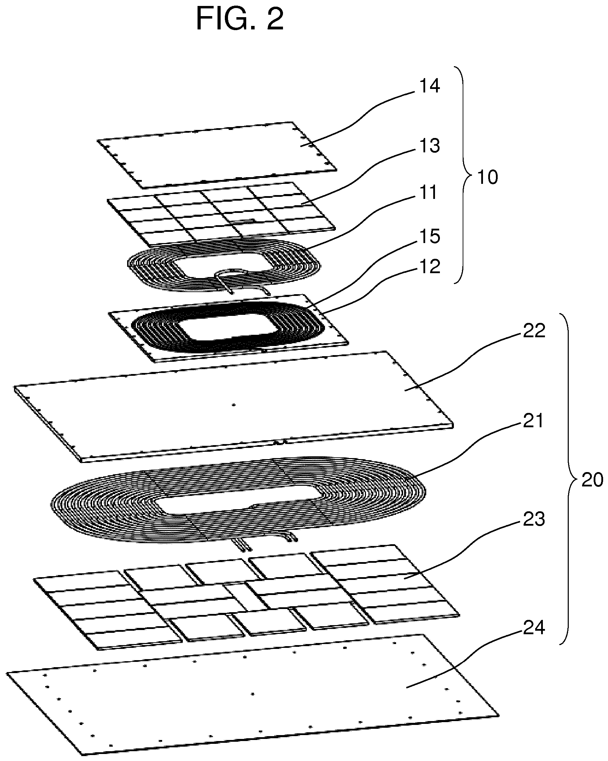

FIG. 1 and FIG. 2 are a perspective view and an exploded perspective view, respectively, of coil unit 10 at a power receiver end and coil unit 20 at a power transmitter end in accordance with an exemplary embodiment of the present disclosure.

As shown in FIGS. 1 and 2, a contactless power transmission system has coil unit 10 disposed in an electric vehicle, and coil unit 20 disposed at a specified location at which the electric vehicle comes to stop.

When the electric vehicle stops at the specified location, coil unit 10 is in a position above coil unit 20. In this situation, coil unit 20 is supplied with high frequency power from a power supply unit (not shown) connected to coil unit 20. This allows electric energy to be transmitted to coil unit 10 in a contactless manner and stored in a vehicle's onboard battery (not shown) connected to coil unit 10.

As shown in FIG. 2, coil unit 10 has coil conductor 11 at a power receiver end, coil base 12 at the power receiver end, magnetic shielding member 13 at the power receiver end, and sound insulation member 14 at the power receiver end. Coil base 12 retains coil conductor 11. Magnetic shielding member 13 is disposed above coil conductor 11. Sound insulation member 14 is disposed above magnetic shielding member 13.

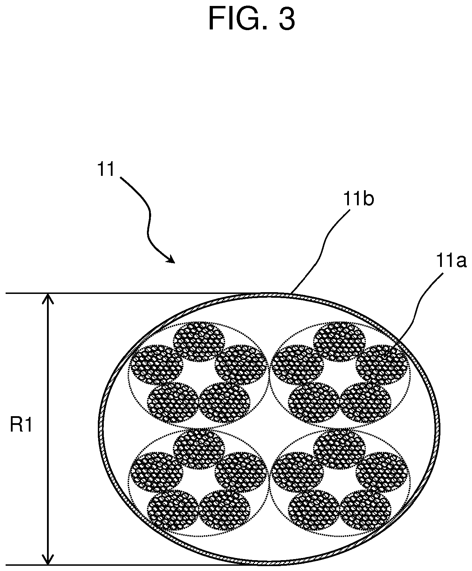

FIG. 3 is a sectional view of coil conductor 11 in accordance with the present exemplary embodiment. As shown in FIG. 3, coil conductor 11 has a plurality of element wires 11a, and insulating member 11b covering a periphery of the plurality of element wires 11a. Coil conductor 11 is formed by twisting together the plurality of element wires 11a so as to have diameter R1 in a range from 3 mm to 6 mm, inclusive. Details of coil conductor 11 will be described later.

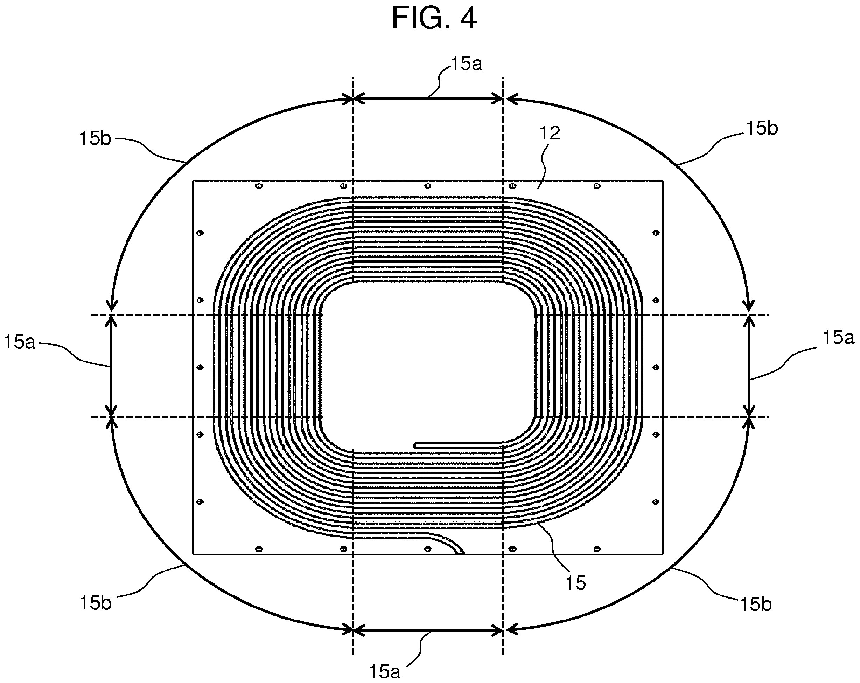

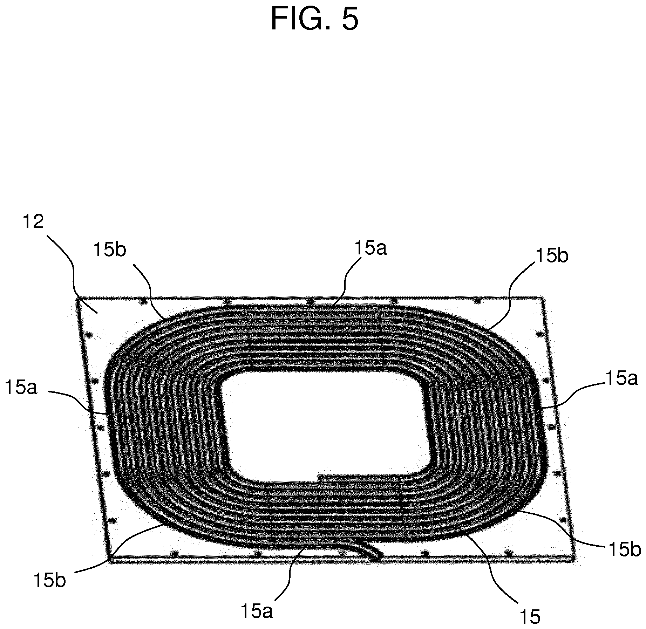

FIG. 4 and FIG. 5 are a plan view and a perspective view, respectively, of a coil base in accordance with the present exemplary embodiment. As shown in FIGS. 4 and 5, coil base 12 has groove 15 formed in a spiral shape for coil conductor 11 to be inserted in groove 15.

Groove 15 has a plurality of straight portions 15a formed sequentially from an inner periphery to an outer periphery, and a plurality of arc portions 15b formed sequentially from an inner periphery to an outer periphery.

Each of the plurality of straight portions 15a is formed in parallel to the other. The plurality of arc portions 15b are concentric, and each of the plurality of arc portions 15b has a specific radius of curvature. The plurality of arc portions 15b are formed so that an innermost arc portion 15b has a radius of curvature equal to or larger than 20 mm.

As shown in FIG. 2, a plurality of magnetic shielding member 13 made of ferrite are arranged side by side to cover the upper side of coil conductor 11. Sound insulation member 14 made of aluminum is disposed to cover the upper side of coil base 12.

Coil unit 20 has coil conductor 21 at a power transmitter end, coil base 22 at the power transmitter end, magnetic shielding member 23 at the power transmitter end, and sound insulation member 24 at the power transmitter end. Coil base 22 retains coil conductor 21. Magnetic shielding member 23 is disposed below coil conductor 21. Sound insulation member 24 is disposed below magnetic shielding member 23.

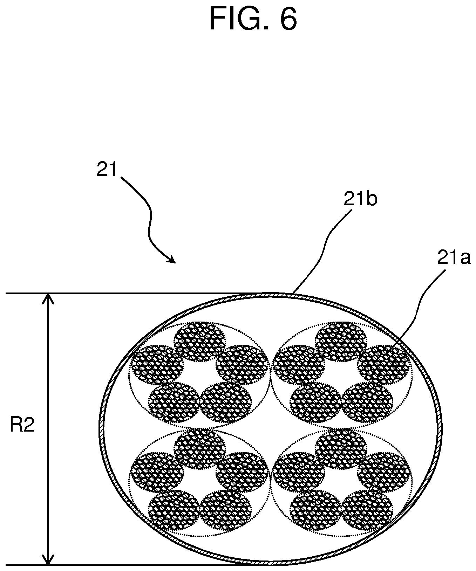

FIG. 6 is a sectional view of coil conductor 21 in accordance with the present exemplary embodiment. As shown in FIG. 6, coil conductor 21 has a plurality of element wires 21a, and insulating member 21b covering a periphery of the plurality of element wires 21a. Coil conductor 21 is formed by twisting together the plurality of element wires 21a so as to have diameter R2 in a range from 3 mm to 6 mm, inclusive. Details of coil conductor 21 will be described later.

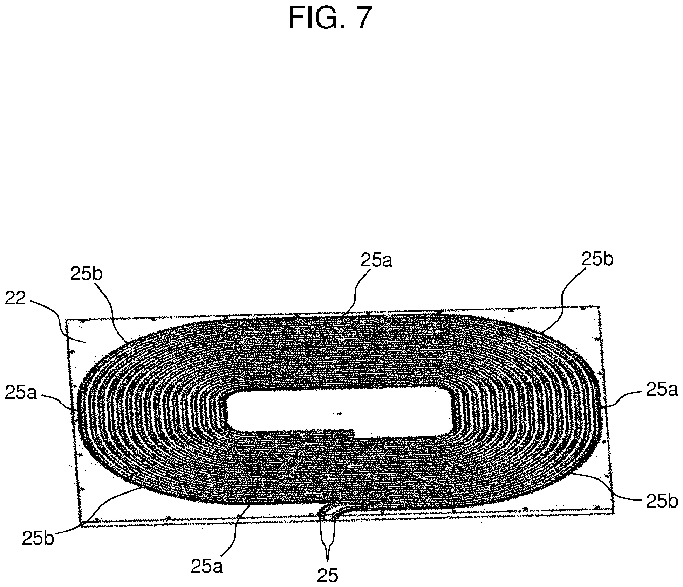

FIG. 7 is a perspective view of coil base 22 in accordance with the present exemplary embodiment. As shown in FIG. 7, coil base 22 has two grooves 25 each of which is formed in a spiral shape and in parallel to the other for coil conductors 21 to be inserted in grooves 25. Groove 25 corresponds to a second groove.

Groove 25 has a plurality of straight portions 25a formed sequentially from an inner periphery to an outer periphery, and a plurality of arc portions 25b formed sequentially from an inner periphery to an outer periphery.

The plurality of arc portions 25b are concentric, and each of the plurality of arc portions 25b has a specific radius of curvature. The plurality of arc portions 25b are formed so that an innermost arc portion 25b has a radius of curvature equal to or larger than 20 mm.

A plurality of magnetic shielding member 23 made of ferrite are arranged side by side to cover the upper side of coil conductor 21. Sound insulation member 24 made of aluminum is disposed to cover the upper side of coil base 22.

Required minimum diameter R1 of coil conductor 11 and required minimum diameter of coil conductor 21 depend on the supplied high frequency power.

Specifically, in a case where coil conductor 11 shown in FIG. 3 is supplied with 3.7 kW of high frequency power, coil conductor 11 is required to have diameter R1 of at least 3 mm.

Coil conductor 11 in this case may be produced by twisting together 1500 element wires 11a each having a diameter of 0.05 mm to form a wire bundle (not shown), and then coating the outer periphery of the wire bundle with insulating member 11b. Insulating member 11b may be made of a resin having an excellent heat-resistance such, for example, as a fluorine resin and may have a thickness of 0.15 mm.

In a case where coil conductor 11 is supplied with 7.7 kW of high frequency power, coil conductor 11 is required to have diameter R1 of at least 5 mm.

Coil conductor 11 in this case may be produced by twisting together 5000 element wires 11a each having a diameter of 0.05 mm to form a wire bundle (not shown), and then coating the outer periphery of the wire bundle with insulating member 11b.

In a case where coil conductor 21 shown in FIG. 6 is supplied with 3.7 kW of high frequency power, coil conductor 21 is required to have diameter R2 of at least 3 mm.

Coil conductor 21 in this case may be produced by twisting together 1500 element wires 21a each having a diameter of 0.05 mm to form a wire bundle (not shown), and then coating the outer periphery of the wire bundle with insulating member 21b. Insulating member 21b may be made of a resin having an excellent heat-resistance such, for example, as a fluorine resin and may have a thickness of 0.15 mm.

In a case where coil conductor 21 is supplied with 7.7 kW of high frequency power, coil conductor 21 is required to have diameter R2 of at least 5 mm.

Coil conductor 21 in this case may be produced by twisting together 5000 element wires 21a each having a diameter of 0.05 mm to form a wire bundle (not shown), and then coating the outer periphery of the wire bundle with insulating member 21b.

The diameter of each element wire 11a, the number of element wires 11a, the diameter of each element wire 21a, the number of element wires 21a, the diameter R1 of coil conductor 11 and the diameter R2 of coil conductor 21 may be appropriately selected depending on the magnitude of the supplied high frequency power.

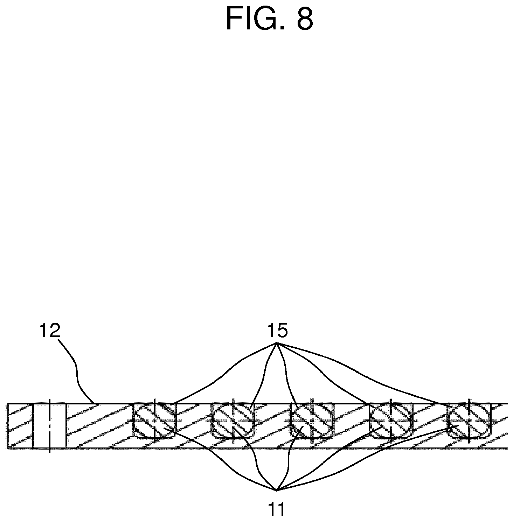

FIG. 8 is a sectional view of coil base 12 in accordance with the present exemplary embodiment in a state in which coil conductor 11 is inserted in groove 15. As shown in FIG. 8, coil conductor 11 is inserted in groove 15 formed on coil base 12 to be retained on coil base 12. Groove 15 corresponds to a first groove.

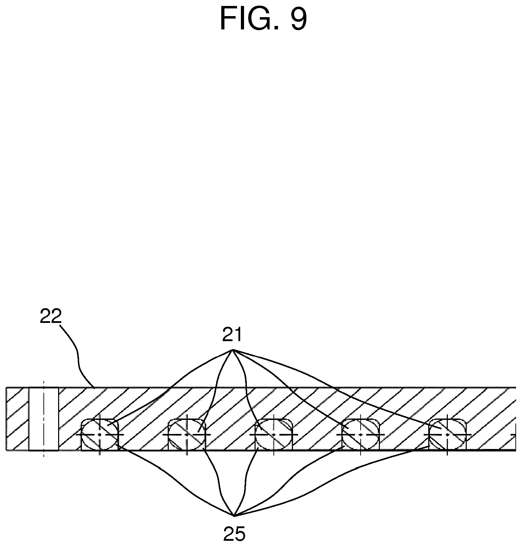

FIG. 9 is a sectional view of coil base 22 in accordance with the present exemplary embodiment in a state in which coil conductor 21 is inserted in groove 25. As shown in FIG. 9, coil conductor 21 is inserted in groove 25 formed on coil base 22 to be retained on coil base 22.

If the radius of curvature of an arc portion 15b is not properly set relative to diameter R1, it is likely that coil conductor 11 would float from the arc portion 15b. If the radius of curvature of an arc portion 25b is not properly set relative to diameter R2, it is likely that coil conductor 21 would float from the arc portion 25b.

In the present exemplary embodiment, in a case where each of diameters R1 and R2 is 3 mm, arc portions 15b are formed such that the radius of curvature of the innermost arc portion 15b of groove 15 becomes equal to or larger than 20 mm. Arc portions 25b are formed such that, and the radius of curvature of the innermost arc portion 25b of groove 25 becomes equal to or larger than 20 mm.

With this configuration, it is possible to prevent occurrence of the above-mentioned defect and to improve reliability of coil units 10 and 20.

In a case where each of diameters R1 and R2 is 5 mm, the radius of curvature of the innermost arc portion 15b of groove 15 may be made equal to or larger than 30 mm, and the radius of curvature of the innermost arc portion 25b of groove 25 may be made equal to or larger than 30 mm.

With this configuration, it is possible to prevent occurrence of the above-mentioned defect and to improve reliability of coil units 10 and 20.

In a case where each of diameters R1 and R2 is 6 mm, the radius of curvature of the innermost arc portion 15b of groove 15 may be made equal to or larger than 35 mm, and the radius of curvature of the innermost arc portion 25b of groove 25 may be made equal to or larger than 35 mm.

With this configuration, it is possible to prevent occurrence of the above-mentioned defect and to improve reliability of coil units 10 and 20.

As the radius of curvature of the innermost arc portion 15b and the radius of curvature of the innermost arc portion 25b become larger, the sizes of coil units 10 and 20 become larger.

In the case where coil units 10 and 20 are large, the area of a part of coil unit 10 located outside the region above coil unit 20 becomes large when an electric vehicle comes to stop at the specified location. In this case, it is likely that power cannot efficiently be transferred from coil unit 20 to coil unit 10.

Accordingly, it is preferable that the radius of curvature of the innermost arc portion 15b and the radius of curvature of the innermost arc portion 25b are each equal to or smaller than 50 mm.

With this configuration, coil units 10 and 20 can be small-sized. As a result, it is possible to efficiently supply power from coil unit 20 to coil unit 10.

In the present exemplary embodiment, coil conductor 11 and coil conductor 21 are formed respectively using element wire 11a and element wires 21a each having a diameter of 0.05 mm. Accordingly, coil conductors 11 and 21 can be made lighter in weight.

The conventional coil unit is produced using a coil conductor which is formed by twisting together a plurality of relatively thick element wires (e.g., 0.1 mm, 0.2 mm or the like). If the diameter of the element wire is made half, the surface area of the element wire becomes one quarter (1/4) and the volume of the element wire becomes one eighth (1/8). Accordingly, it is possible by doubling the number of element wires to prevent increase in volume and weight, while securing the same surface area as that of the conventional stranded wire.

The present exemplary embodiment uses element wires 11a and 21a each having a diameter equal to or smaller than half the diameter of the conventional element wires. Accordingly, it is possible to make coil conductors 11 and 21 lighter in weight compared to the conventional coil conductor.

In the present exemplary embodiment, coil conductor 11 is formed by the plurality of element wires 11a and insulating member 11b, and coil conductor 21 is formed by the plurality of element wires 21a and insulating member 21b.

With this configuration, it is possible to prevent coil conductors 11 and 21 from being broken when they are inserted into grooves 15 and 25, respectively. As a result, reliability of coil units 10 and 20 can be improved.

In the present exemplary embodiment, two grooves 25 are formed on coil base 22. However, a single groove 25 may be formed on coil base 22.

In the present exemplary embodiment, the diameter of each of element wires 11a and 21a is 0.05 mm. However, the diameter of each of element wires 11a and 21a may not be limited to this size, and may be in a range from 0.03 mm to 0.08 mm, inclusive.

In the present exemplary embodiment, coil unit 10 supplied with 7.7 kW of high frequency power is provided with coil conductor 11 formed by twisting together 5000 element wires 11a each having a diameter of 0.05 mm. Coil unit 20 supplied with 7.7 kW of high frequency power is provided with coil conductor 21 formed by twisting together 5000 element wires 21a each having a diameter of 0.05 mm.

However, coil conductor 11 may have diameter R1 of at least 5 mm and coil conductor 21 may have diameter R2 of at least 5 mm. Also, the number of element wires used may not be limited to 5000.

In the present exemplary embodiment, the radius of curvature of the innermost arc portion 15b is equal to or larger than 20 mm, and the radius of curvature of the innermost arc portion 25b is equal to or larger than 20 mm.

However, the groove may be formed such that the radii of curvature of the arc portions increase in order from the innermost arc portion toward the outermost arc portion or may be formed such that the radii of curvature of the arc portions are constant. The radius of curvature of an arc portion 15b having a minimum radius of curvature may be equal to or larger than 20 mm, and the radius of curvature of an arc portion 25b having a minimum radius of curvature may be equal to or larger than 20 mm.

### Modification Example of the Coil Base

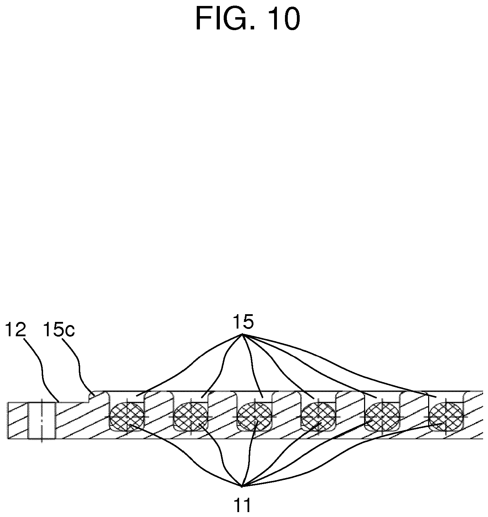

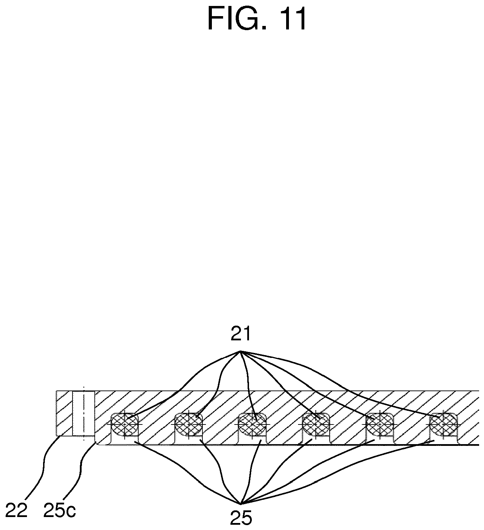

Hereinafter, a modification example of the exemplary embodiment of the present disclosure will be described with reference to FIGS. 10 and 11. FIG. 10 is a sectional view of coil base 12 in accordance with the modification example of the present exemplary embodiment in a state in which a coil conductor is inserted in a groove. FIG. 11 is a sectional view of coil base 22 in accordance with the modification example of the present exemplary embodiment in a state in which a coil conductor is inserted in a groove.

Referring to FIG. 10, the depth of groove 15 is larger than diameter R1 of coil conductor 11, and the difference between the depth of groove 15 and diameter R1 is in a range from 1.5 mm to 2.0 mm, inclusive. Referring to FIG. 11, the depth of groove 25 is larger than diameter R2 of coil conductor 21, and the difference between the depth of groove 25 and diameter R2 is in a range from 1.5 mm to 2.0 mm, inclusive.

Rib 15c protruded upward from coil base 12 is formed at the outer periphery of groove 15. Rib 25c protruded downward from coil base 22 is formed at the outer periphery of groove 25. Ribs 15c and rib 25c correspond to a first rib and a second rib, respectively.

In a state in which coil conductor 11 is inserted in groove 15, an upper end of groove 15 is positioned upper than coil conductor 11. In a state in which coil conductor 21 is inserted in groove 25, a lower end of groove 25 is positioned lower than coil conductor 21. The upper end of groove 15 and the lower end of groove 25 are each formed in a roundish shape by R-plane chamfering or C-plane chamfering.

A stress applied to coil conductor 11 at straight portion 15a is different from a stress applied to coil conductor 11 at arc portion 15b. Accordingly, when coil conductor 11 is inserted into groove 15, coil conductor 11 is twisted due to the presence of arc portion 15b.

As a result, there is a possibility that residual stresses would be generated in element wire 11a and insulating member 11b, and that coil conductor 11 would be deformed to float from the bottom of groove 15 at arc portion 15b.

A stress applied to coil conductor 21 at straight portion 25a is different from a stress applied to coil conductor 21 at arc portion 25b. Accordingly, when coil conductor 21 is inserted into groove 25, coil conductor 21 is twisted due to the presence of arc portion 25b.

As a result, there is a possibility that residual stresses would be generated in element wire 21a and insulating member 21b, and that coil conductor 21 would be deformed to float from the bottom of groove 25 at arc portion 25b.

Considering the above, in the present exemplary embodiment, the depth of groove 15 is larger than diameter R1 of coil conductor 11, and the difference between the depth of groove 15 and diameter R1 is in a range from 1.5 mm to 2.0 mm, inclusive. Also, the depth of groove 25 is larger than diameter R2 of coil conductor 21, and the difference between the depth of groove 25 and diameter R2 is in a range from 1.5 mm to 2.0 mm, inclusive.

With this configuration, coil conductor 11 can be securely placed in groove 15 and is prevented from floating from arc portion 15b. Also, coil conductor 21 can be securely placed in groove 25 and is prevented from floating from arc portion 25b. As a result, it is possible to improve reliability of coil units 10 and 20.

As the height of rib 15c becomes higher, it becomes easier to insert coil conductor 11 into groove 15. As the height of rib 25c becomes higher, it becomes easier to insert coil conductor 21 into groove 25. Accordingly, workability is improved.

However, as the heights of the ribs 15c and 25c becomes higher, the distance between coil conductor 11 and magnetic shielding member 13 and the distance between coil conductor 21 and magnetic shielding member 23 increase. Therefore, the power transfer efficiency reduces. Accordingly, it is preferable to set the heights of the ribs to be as low as possible while considering the workability and the power transfer efficiency.

This makes it possible to reduce the distance between coil conductor 11 and magnetic shielding member 13, as well as to prevent variations in the distance. Also, it is possible to reduce the distance between coil conductor 21 and magnetic shielding member 23, as well as to prevent variations in the distance.

After coil conductor 11 has been inserted in coil base 12, coil conductor 11 may be coated with an adhesive or the like to allow coil conductor 11 to be pushed to the bottom of groove 15.

After coil conductor 21 has been inserted in coil base 22, coil conductor 21 may be coated with an adhesive or the like to allow coil conductor 21 to be pushed to the upper part of groove 25.

This makes it possible to prevent coil conductor 11 from floating from arc portion 15b. Also, it is possible to prevent coil conductor 21 from floating from arc portion 25b.

### Details of the Coil conductor

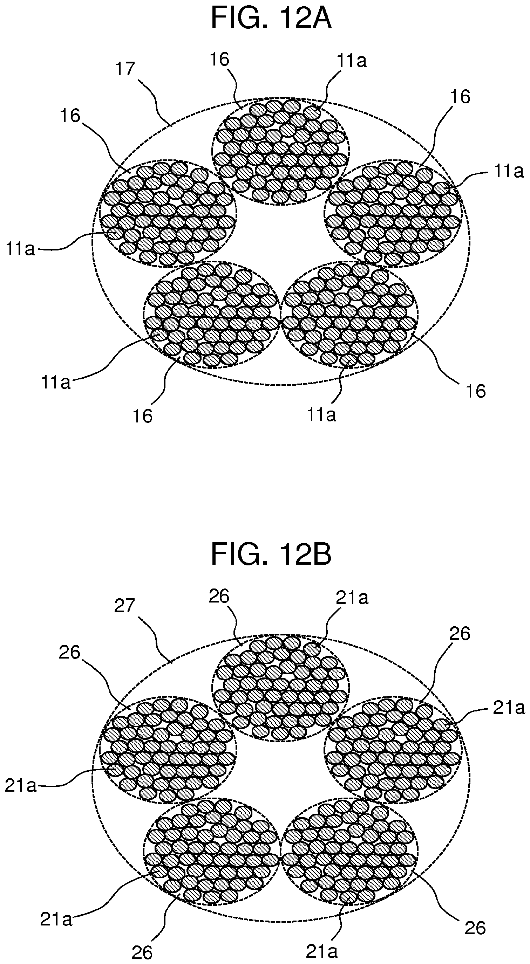

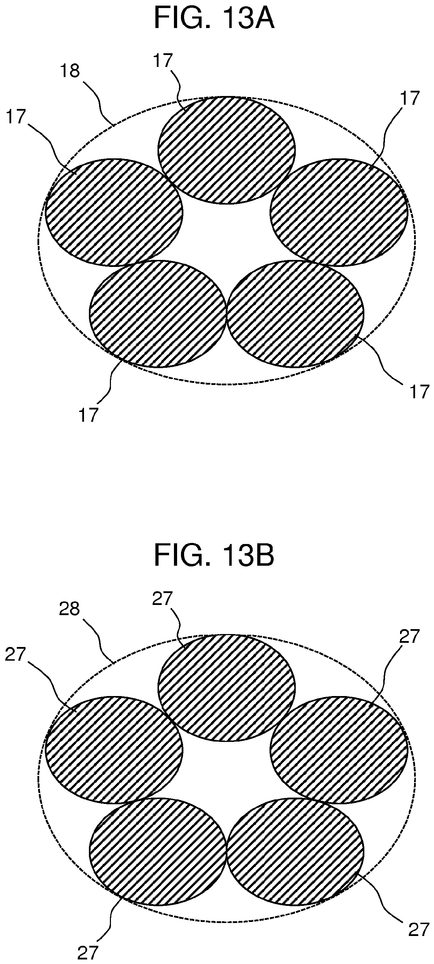

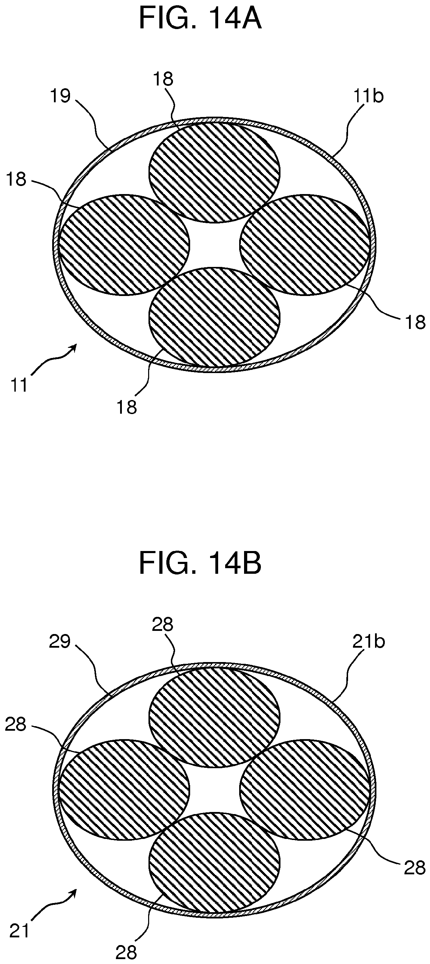

The coil conductor in accordance with the exemplary embodiment of the present disclosure will hereinafter be described in detail with reference to FIGS 12A to 14B. FIGS. 12A and 12B are sectional views of stranded wires 17 and 27, respectively, in accordance with the present exemplary embodiment. FIGS. 13A and 13B are sectional views of stranded wires 18 and 28, respectively, in accordance with the present exemplary embodiment. FIGS. 14A and 14B are sectional views of coil conductors 11 and 21, respectively, in accordance with the present exemplary embodiment.

As shown in FIG. 12A, the plurality of element wires 11a are twisted together to form each of stranded wires 16. A plurality of stranded wires 16 are twisted together to form stranded wire 17. As shown in FIG. 13A, a plurality of stranded wires 17 are twisted together to form stranded wire 18.

As shown in FIG. 14A, a plurality of stranded wires 18 are twisted together to form stranded wire 19. The outer periphery of stranded wire 19 is covered with insulating member 11b to form coil conductor 11. Stranded wires 16, 17, 18 and 19 respectively correspond to first, second, third and fourth stranded wires at the power receiver end.

As shown in FIG. 12B, the plurality of element wires 21a are twisted together to form each of stranded wires 26. A plurality of stranded wires 26 are twisted together to form stranded wire 27. As shown in FIG. 13B, a plurality of stranded wires 27 are twisted together to form stranded wire 28.

As shown in FIG. 14B, a plurality of stranded wires 28 are twisted together to form stranded wire 29. The outer periphery of stranded wire 29 is covered with insulating member 21b to form coil conductor 21. Stranded wires 26, 27, 28 and 29 respectively correspond to first, second, third and fourth stranded wires at the power transmitter end.

Stranded wires 16 and 26 are formed to be smaller in twist pitch than stranded wires 17 and 27, respectively. Stranded wires 17 and 27 are formed to be smaller in twist pitch than stranded wires 18 and 28, respectively. Stranded wires 18 and 28 are formed to be smaller in twist pitch than stranded wires 19 and 29, respectively.

Specifically, stranded wire 16 is formed to have a twist pitch of 40 mm so as to reduce gaps formed when the plurality of element wires 11a are twisted together. Much the same is true for stranded wire 26.

Stranded wire 17 is formed to have a twist pitch of 50 mm by deforming stranded wires 16 so that the tension applied to element wire 11a at the time of forming stranded wire 17 becomes the same as the tension applied to element wire 11a at the time of forming stranded wire 16. Much the same is true for stranded wire 27.

Stranded wire 18 is formed to have a twist pitch of 60 mm by deforming stranded wires 17 so that the tension applied to the plurality of element wires 11a at the time of forming stranded wire 18 becomes the same as the tension applied to the plurality of element wires 11a at the time of forming stranded wire 17. Much the same is true for stranded wire 28.

Stranded wire 19 is formed to have a twist pitch in a range from 65 mm to 75 mm by deforming stranded wires 18 so that the tension applied to the plurality of element wires 11a at the time of forming stranded wire 19 becomes the same as the tension applied to the plurality of element wires 11a at the time of forming stranded wire 18. Much the same is true for stranded wire 29.

The conventional coil unit uses the coil conductor which is formed by twisting together a plurality of relatively thick element wires (e.g., 0.1 mm, 0.2 mm or the like). If the diameter of the element wire is made half, the surface area of the element wire becomes one quarter (1/4) and the volume of the element wire becomes one eighth (1/8). Accordingly, it is possible by doubling the number of element wires to prevent increase in volume and weight, while securing the same surface area as that of the conventional stranded wire.

The present exemplary embodiment uses element wires 11a and 21a each having a diameter equal to or smaller than half the diameter of the conventional element wires. Accordingly, it is possible to make coil conductors 11 and 21 lighter in weight compared to the conventional coil conductors.

As described above, coil conductor 11 is formed by twisting together element wires 11a each having a diameter in a range from 0.03 mm to 0.08 mm, inclusive. According to the present exemplary embodiment, it is possible by twisting together the plurality of element wires 11a plural times to prevent the element wire from being broken due to the tension applied at the time of forming the coil conductor. Much the same is true for coil conductor 21.

According to the present exemplary embodiment, it is possible to make coil conductor 11 and coil conductor 21 lighter in weight by respectively using element wires 11a and element wires 21a which are thinner than the conventional element wires.

It is possible to prevent element wires 11a and 21a from being broken by maintaining constant the tension received by each of element wires 11a and 21a. As a result, reliability of coil units 10 and 20 can be improved.

It is possible to form a first stranded wire having an approximately circular sectional area by twisting together element wires 11a or 21a at a tension within a range in which the element wires are not broken, while keeping the element wires in close contact with each other.

At the time of forming stranded wire 16 or 26, since element wires 11a or 21a, each of which is a solid wire, are twisted together, a stress comparable to the tensile strength of the solid wire cannot be applied. Therefore, it is necessary to twist together a plurality of element wires so as to have an optimum twist pitch depending on the number of element wires to be twisted together.

At the time of forming stranded wire 17 or 27 it is possible to apply a stress which is larger than the tensile strength of the solid wire to the whole of the plurality of element wires 11a or 21a. In this case, it is possible by making the twist pitch of stranded wire 17 to be larger than the twist pitch of stranded wire 16 to form a stranded wire which is thinner than a case in which the two twist pitches are the same as each other.

Similarly, at the time of forming the third stranded wire, it is possible by making the twist pitch of the third stranded wire to be larger than the twist pitch of the second stranded wire to form a stranded wire which is thinner than a case in which the two twist pitches are the same as each other.

Also, at the time of forming the fourth stranded wire, it is possible by making the twist pitch of the fourth stranded wire to be larger than the twist pitch of the third stranded wire to form a stranded wire which is thinner than a case in which the two twist pitches are the same as each other. With the above-described configuration, it is possible to make coil conductors 11 and 21 to be thin.

In the present exemplary embodiment, the twist pitches of stranded wire 16, stranded wire 17, stranded wire 18 and stranded wire 19 are set to be approximately 40 mm, approximately 50 mm, approximately 60 mm and approximately in a range from 65 mm to 75 mm, respectively. However, the twist pitch of each stranded wire may be increased or decreased by approximately 10 mm from these values.

According to the present exemplary embodiment, in each of the cases of forming coil conductors 11 and 21 respectively using element wires 11a and 21a each having a small diameter, it is possible to prevent coil conductors 11 and 21 from being broken. As a result, reliability of coil units 10 and 20 can be improved.

Since coil conductors 11 and 21 can be made thin, it is possible to place coil conductor 11 closer to coil conductor 21. As a result, the power transfer efficiency can be improved.

As coil conductors 11 and 21 become thicker, their weights will increase. As a result, the weights of coil units 10 and 20 will increase. Particularly, in a case where coil unit 10 is placed on an electric vehicle, the weight of the electric vehicle will increase, so that the energy saving performances such, for example, as fuel consumption will reduce.

According to the present exemplary embodiment, it is possible by reducing the weight of coil units 10 and 20 to prevent the weight increase of the electric vehicle. As a result, the energy saving performances can be improved.

### INDUSTRIAL APPLICABILITY

The present disclosure is applicable to contactless power transmission systems that transmit power to an electric vehicle in a contactless manner. However, the coil unit according to the present disclosure is applicable to not only such contactless power transmission systems, but also to other equipment such, for example as an induction heating apparatus.

### REFERENCE MARKS IN THE DRAWINGS

- 10, 20: coil unit
- 11, 21: coil conductor
- 11a, 21a: element wire
- 11b, 21b: insulating member
- 12, 22: coil base
- 13, 23: magnetic shielding member
- 14, 24: sound insulation member
- 15, 25: groove
- 15a, 25a: straight portion
- 15b, 25b: arc portion
- 15c, 25c: rib
- 16, 26, 17, 27, 18, 28, 19, 29: stranded wire

## Claims

1. A coil unit (10, 20) comprising:
a coil conductor (11, 21) formed of a plurality of element wires (11a, 21a); and
a coil base (12, 22) having a groove (15, 25) configured to retain the coil conductor (11, 21),
**characterized in that** the coil conductor (11, 21) has a diameter in a range from 3 mm to 6 mm, inclusive, and
wherein the groove (15, 25) has a straight portion (15a, 25a), and an arc portion (15b, 25b) having a radius of curvature of at least 20 mm.

2. The coil unit (10, 20) according to claim 1, wherein a depth of the groove (15, 25) is larger than the diameter of the coil conductor (11, 21), and
wherein a difference between the depth of the groove (15, 25) and the diameter of the coil conductor (11, 21) is in a range from 1.5 mm to 2.0 mm, inclusive.

3. The coil unit (10, 20) according to claim 1, wherein the coil conductor (11, 21) includes a first stranded wire (16, 26) formed by twisting together the plurality of element wires (11a, 21a), a second stranded wire (17, 27) formed by twisting together a plurality of the first stranded wires (16, 26), and a third stranded wire (18, 28) formed by twisting together a plurality of the second stranded wires (17, 27).

4. The coil unit (10, 20) according to claim 3, wherein a twist pitch of the first stranded wire (16, 26) is smaller than a twist pitch of the second stranded wire (17, 27), and the twist pitch of the second stranded wire (17, 27) is smaller than a twist pitch of the third stranded wire (18, 28).

5. The coil unit (10, 20) according to claim 1, wherein the coil conductor (11, 21) includes an insulating member (11b, 21b) that covers a periphery of the plurality of element wires (11a, 21a).

## Patentansprüche

1. Spuleneinheit (10, 20) mit:
einem Spulenleiter (11, 21), der aus mehreren Elementdrähten (11a, 21a) gebildet ist; und
einer Spulenbasis (12, 22) mit einer Nut (15, 25), die konfiguriert ist, um den Spulenleiter (11, 21) zu halten,
**dadurch gekennzeichnet, dass**
der Spulenleiter (11, 21) einen Durchmesser in einem Bereich von 3 mm bis einschließlich 6 mm hat, und dass
die Nut (15, 25) einen geraden Abschnitt (15a, 25a) und einen Bogenabschnitt (15b, 25b) mit einem Krümmungsradius von mindestens 20 mm aufweist.

2. Spuleneinheit (10, 20) nach Anspruch 1, wobei eine Tiefe der Nut (15, 25) größer als der Durchmesser des Spulenleiters (11, 21) ist, und
wobei ein Unterschied zwischen der Tiefe der Nut (15, 25) und dem Durchmesser des Spulenleiters (11, 21) in einem Bereich von 1,5 mm bis einschließlich 2,0 mm liegt.

3. Spuleneinheit (10, 20) nach Anspruch 1, wobei der Spulenleiter (11, 21) einen ersten Litzendraht (16, 26) umfasst, der durch Verdrillen der mehreren Elementdrähte (11a, 21a) gebildet wird, einen zweiten Litzendraht (17, 27), der durch Verdrillen mehrerer der ersten Litzendrähte (16, 26) gebildet wird, und einen dritten Litzendraht (18, 28), der durch Verdrillen mehrerer der zweiten Litzendrähte gebildet wird.

4. Spuleneinheit (10, 20) nach Anspruch 3, wobei eine Verdrillungs-Ganghöhe des ersten Litzendrahtes (16, 26) kleiner als eine Verdrillungs-Ganghöhe des zweiten Litzendrahtes (17, 27) ist, und die Verdrillungs-Ganghöhe des zweiten Litzendrahtes (17, 27) kleiner als eine Verdrillungs-Ganghöhe des dritten Litzendrahtes (18, 28) ist.

5. Spuleneinheit (10, 20) nach Anspruch 1, wobei der Spulenleiter (11, 21) ein Isolierelement (11b, 21b) umfasst, das einen Umfang der mehreren Elementdrähte (11a, 21a) abdeckt.

## Revendications

1. Unité de bobine (10, 20) comprenant :
un conducteur de bobine (11, 21) formé d'une pluralité de fils élémentaires (11a, 21a) ; et
une base de bobine (12, 22) ayant une rainure (15, 25) configurée pour retenir le conducteur de bobine (11, 21),
**caractérisée en ce que** le conducteur de bobine (11, 21) a un diamètre dans une plage de 3 mm à 6 mm inclus, et
dans laquelle la rainure (15, 25) a une portion droite (15a, 25a), et une portion en arc (15b, 25b) ayant un rayon de courbure d'au moins 20 mm.

2. Unité de bobine (10, 20) selon la revendication 1, dans laquelle une profondeur de la rainure (15, 25) est plus grande que le diamètre du conducteur de bobine (11, 21), et
dans laquelle une différence entre la profondeur de la rainure (15, 25) et le diamètre du conducteur de bobine (11, 21) est dans une plage de 1,5 mm à 2,0 mm inclus.

3. Unité de bobine (10, 20) selon la revendication 1, dans laquelle le conducteur de bobine (11, 21) comporte un premier toron (16, 26) formé par torsadage conjoint de la pluralité de fils élémentaires (11a, 21a), un deuxième toron (17, 27) formé par torsadage conjoint d'une pluralité des premiers torons (16, 26), et un troisième toron (18, 28) formé par torsadage conjoint d'une pluralité des deuxièmes torons (17, 27).

4. Unité de bobine (10, 20) selon la revendication 3, dans laquelle un pas de torsade du premier toron (16, 26) est plus petit qu'un pas de torsade du deuxième toron (17, 27), et le pas de torsade du deuxième toron (17, 27) est plus petit qu'un pas de torsade du troisième toron (18, 28).

5. Unité de bobine (10, 20) selon la revendication 1, dans laquelle le conducteur de bobine (11, 21) comporte un organe isolant (11b, 21b) qui couvre une périphérie de la pluralité de fils élémentaires (11a, 21a).
